# EUROPEAN PATENT SPECIFICATION

(11) **EP 0 467 240 B1**
(45) Date of publication and mention of the grant of the patent: **09.11.1994**
(21) Application number: 91111692.9
(22) Date of filing: 12.07.1991
(51) Int. Cl.: G02B 13/14, G02B 1/02

(54) **Ultra-wideband achromatic lens**
Ultra-Breitband-Achromat
Lentille achromatique à bande ultra-large

(30) Priority: 16.07.1990 US 552973
(43) Date of publication of application: 22.01.1992
(73) Proprietor: Santa Barbara Research Center, Goleta California 93117 (US)
(72) Inventor: Sepulveda, Cesar A., Goleta, California 93117 (US)
(74) Representative: Grünecker, Kinkeldey, Stockmair & Schwanhäusser Anwaltssozietät

(56) References cited:
- DE-A- 3 120 276
- US-A- 3 766 080
- US-A- 4 712 886
- OPTICAL ENGINEERING, vol. 23, no. 2, March-April 1984, pp. 187-192, Bellingham, Washington, US ; M.W. MCDOWELL et al. : "Achromatization in the 3 to 5 Mum spectral region with visible light transmitting materials"
- OPTICAL ENGINEERING, vol. 23, no. 2, March/April 1984, pp. 111-116, Bellingham, Washington, US ; T.H. JAMIESON : "Ultrawide waveband optics"

## Description

### BACKGROUND OF THE INVENTION

### Field of the Invention:

The present invention relates to optical systems. More specifically, the present invention relates to achromatic lenses.

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

### Description of the Related Art:

Infrared and visible optical systems require lenses which focus or map energy from a scene on a detector. In certain applications, e.g., remote sensing devices, it is desirable to provide an optical arrangement capable of focusing energy from multiple bands on a single detector. For example, a need for visible and infrared optical capabilities has been recognized in certain missile systems. Missiles have heretofore been generally limited to single band (infrared) operation. While use of complex optical arrangements with several optical materials to provide multiband capability appears to be known in the art, these arrangements generally employ optical elements made of compounds which are often costly to manufacture and difficult to maintain. Many of the compounds are tough to grind and polish, fragile, subject to cold flow or deformation under mechanical strain and tend to shatter with changes in temperature. Moreover, this approach is not simultaneous. Multiband operation is generally afforded in a sequential manner which is time consuming and unacceptable for the more demanding mission.

Another, less effective, conventional approach to the provision of multiband operation involves the use of curved mirrors. However, the curved mirror optical arrangements are typically complex and tend to limit or block the field-of-view of the system. Accordingly, these systems are generally limited in the number of elements which may be used and, accordingly, offer limited performance as well.

In short, previous refractive systems have typically been achromatized only over a limited wavelength range, e.g. 0.4 to 0.7 microns (visible), 3.5 to 5 microns (near infrared) or 8 to 12 microns (mid-infrared) or perhaps independently achromatized over two of those bands with no correction in the intervening wavelengths. Remote sensing devices increasingly rely on measurements throughout the continuous range, say .4 to 5 microns.

Thus, there is a need in the art for an alternative technique for providing multiband operation from the visible to the infrared range of the energy spectrum.

### SUMMARY OF THE INVENTION

The need in the art is addressed by the present invention which provides an ultra-wide band achromatic lens. The lens is made of three alternating elements of calcium fluoride or magnesium oxide in relative optical alignment. In a first embodiment, the elements are arranged in a Cooke triplet with a first positive (convergent) element of calcium fluoride, a second negative (divergent) element of magnesium oxide, and a third positive element of calcium fluoride. In a second embodiment, a wide-angle triplet is provided with a first negative element of magnesium oxide, a second positive element of calcium fluoride, and a third element of magnesium oxide.

In both embodiments, the invention provides an achromatic optical system which is simultaneously corrected for chromatic and other aberrations over the multiband wavelength range from the visible to the very near infrared portion of the energy spectrum, i.e., .5 microns to 5 microns.

### BRIEF DESCRIPTION OF THE DRAWINGS

Fig. 1 is a first embodiment of the ultra-wide band achromatic lens of the present invention configured as a Cooke triplet with a calcium fluoride-magnesium oxide-calcium fluoride construction.

Fig. 2 is a second embodiment of the ultra-wide band achromatic lens of the present invention configured as a wide-angle triplet with a magnesium oxide-calcium fluoride-magnesium oxide construction.

### DESCRIPTION OF THE INVENTION

Illustrative embodiments and exemplary applications will now be described with reference to the accompanying drawings to disclose the advantageous teachings of the present invention.

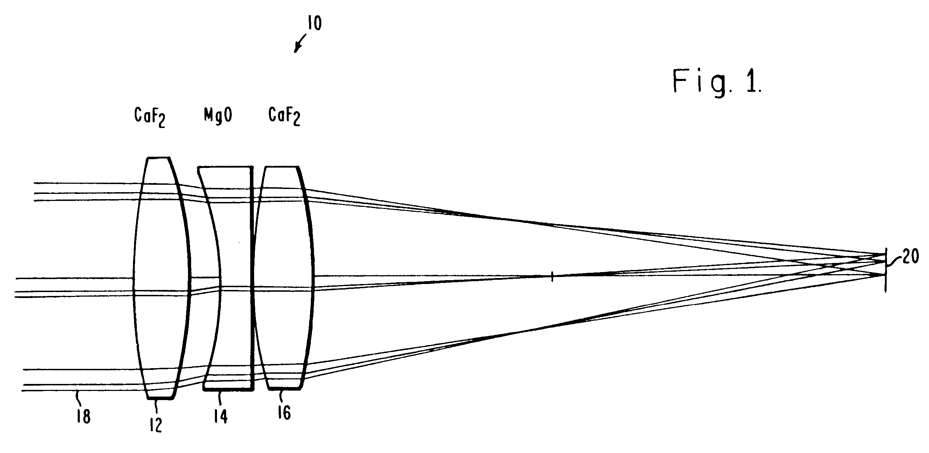

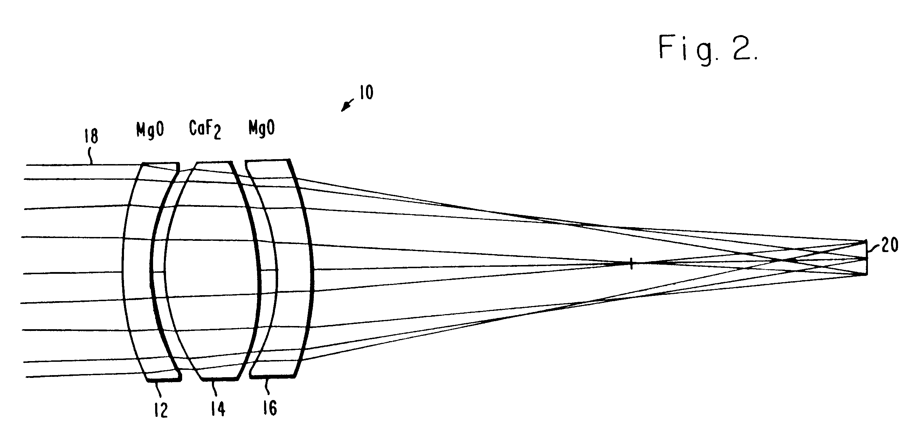

Fig. 1 is a first embodiment of the ultra-wide band achromatic lens 10 of the present invention while Fig. 2 is a second embodiment of same. In each embodiment, the lens 10 is made of three alternating optical elements 12, 14 and 16. Each of the elements 12, 14 and 16 are in relative optical alignment such that incident rays of optical energy 18 are focused at a detector 20.

In the first embodiment, the lens 10 is configured as a Cooke triplet with the first and third elements 12 and 16 being convergent (positive) and the second element 14 being divergent (negative). In accordance with the present teachings, the first and third elements 12 and 16 are constructed of calcium fluoride and the second element 14 is constructed of magnesium oxide.

In the second embodiment, the lens 10 is configured as a wide-angle triplet with the first and third elements 12 and 14 being divergent (negative) and the second element 14 being convergent (positive). In accordance with the present teachings, the first and third elements 12 and 16 are of magnesium oxide construction and the second element 14 is of calcium fluoride construction.

In the best mode, each of the elements 12, 14 and 16 in each embodiment is of single crystal construction. As may be recognized by those skilled in the art, the embodiment of Fig. 1 is generally faster than that of Fig. 2 with a more narrow field-of-view (FOV). Accordingly, the embodiment of Fig. 2 is better suited for applications in which a wide FOV is desired over speed. (In this context, speed refers to the rate of convergence of optical energy passing through the lens. The faster the lens, the more quickly output energy converges on the target detector. Speed is typically expressed as the "f-number" of the lens which is the ratio of the focal length of the output beam to the diameter of the lens. The lower the f-number, the faster the lens.)

In both embodiments, the invention provides an achromatic optical system which is simultaneously corrected for chromatic and other aberrations over the multiband wavelength range from the visible to the very near infrared portion of the energy spectrum, i.e., .5 microns to 5 microns.

Each of the lenses described above are designed and constructed in a conventional manner. In practice, the lens is first designed using a computer optical design program such as Code V from Optical Research Associates of Pasadena, California or Accos V from Scientific Calculations, Inc. of Fishers, New York. The general shape of each element is input by specifying the radius of curvature of each surface, the material choice for that element and the thickness of the element. The airspaces between elements are also specified at this point. The system requirements are then input with respect to the desired f-number, the focal length, and image quality in terms of spot size by way of example. Next, the range of wavelengths is input over which the system is specified to provide good performance thereover. The variable parameters are specified. (These are typically based on mechanical constraints which are user defined and/or based on limitations of the materials chosen.) An optimization run is then performed, usually in several iterations, to obtain the required optical performance.

The program will then output:
1) an optical prescription, a list of each surface with
   a) the radius of curvature of each surface,
   b) the material following each surface, and
   c) the thickness of the surface and
2) performance in terms of image quality over the specified FOV (again, measured in terms of spot size).

Next, the program will perform a tolerance analysis, if required. A shop or fabrication diagram is then provided specifying the materials to be used, the shape and the tolerances of each, based on the program outputs.

Finally, the lens is manufactured in a conventional manner by a qualified optical manufacturer.

Thus, the present invention has been described herein with reference to a particular embodiment for a particular application. Those having ordinary skill in the art and access to the present teachings will recognize additional modifications applications and embodiments within the scope thereof. For example, the invention is not limited to the number of elements used in a lens. Any number of lenses may be used to satisfy the requirements of a particular application without departing from the scope of the present teachings. Further, the invention is not limited to a single crystal construction. Polycrystalline construction may be used as well.

It is therefore intended by the appended claims to cover any and all such applications, modifications and embodiments within the scope of the present invention.

## Claims

1. An ultra-wide band achromatic lens (10) comprising:
a first element (12) made of calcium fluoride;
a second element (14), in optical alignment with said first element (12), made of magnesium oxide; and
a third element (16), in optical alignment with said first and second elements (12, 14), made of calcium fluoride.

2. An ultra-wide band achromatic lens (10) comprising:
a first element (12) made of magnesium oxide;
a second element (14), in optical alignment with said first element (12), made of calcium fluoride; and
a third element (16), in optical alignment with said first and second elements (12, 14), made of magnesium oxide.

3. The lens (10) of Claim 1 or Claim 2 wherein said first element is convergent.

4. The lens (10) of Claim 3 wherein said second element is divergent.

5. The lens (10) of Claim 4 wherein said third element is convergent.

6. The lens (10) of Claim 1 or Claim 2 wherein said first element is divergent.

7. The lens (10) of Claim 6 wherein said second element is convergent.

8. The lens (10) of Claim 7 wherein said third element is divergent.

9. A missile apparatus with an ultra-wide band achromatic lens (10) of Claim 1 or Claim 2.

## Patentansprüche

1. Ultra-Breitband-Achromat (10), umfassend:
ein erstes Element (12) aus Kalziumfluorid;
ein zweites Element (14) aus Magnesiumoxid, das optisch zu dem ersten Element (12) ausgerichtet ist, und
ein drittes Element (16) aus Kalziumfluorid, das optisch zu dem ersten und zweiten Element (12, 14) ausgerichtet ist.

2. Ultra-Breitband-Achromat (10), umfassend:
ein erstes Element (12) aus Magnesiumoxid,
ein zweites Element (14) aus Kalziumfluorid, das optisch
zu dem ersten Element (12) ausgerichtet ist, und
ein drittes Element (16) aus Magnesiumoxid, das optisch zu dem ersten und zweiten Element (12, 14) ausgerichtet ist.

3. Achromat (10) nach den Ansprüchen 1 oder 2, wobei das erste Element konvergierend ist.

4. Achromat (10) nach Anspruch 3, wobei das zweite Element divergierend ist.

5. Achromat (10) nach Anspruch 4, wobei das dritte Element konvergierend ist.

6. Achromat (10) nach Ansprüchen 1 oder 2, wobei das erste Element divergierend ist.

7. Achromat (10) nach Anspruch 6, wobei das zweite Element konvergierend ist.

8. Achromat (10) nach Anspruch 7, wobei das dritte Element divergierend ist.

9. Eine Geschoßvorrichtung mit einem Ultra-Breitband-Achromat (10) nach Ansprüchen 1 oder 2.

## Revendications

1. Lentille achromatique (10) à bande ultralarge comportant :
un premier élément (12) formé de fluorure de calcium ;
un deuxième élément (14), en alignement optique avec ledit premier élément (12), formé d'oxyde de magnésium et
un troisième élément (16), en alignement optique avec lesdits premier et deuxième éléments (12, 14), formé de fluorure de calcium.

2. Lentille achromatique (10) à bande ultralarge comportant :
un premier élément (12) formé d'oxyde de magnésium ;
un deuxième élément (14), en alignement optique avec ledit premier élément (12) , formé de fluorure de calcium ; et
un troisième élément (16), en alignement optique avec lesdits premier et deuxième éléments (12, 14), formé d'oxyde de magnésium.

3. Lentille (10) selon la revendication 1 ou la revendication 2, dans laquelle ledit premier élément est convergent.

4. Lentille (10) selon la revendication 3, dans laquelle ledit deuxième élément est divergent.

5. Lentille (10) selon la revendication 4, dans laquelle ledit troisième élément est convergent.

6. Lentille (10) selon la revendication 1 ou la revendication 2, dans laquelle ledit premier élément est divergent.

7. Lentille (10) selon la revendication 6, dans laquelle ledit deuxième élément est convergent.

8. Lentille (10) selon la revendication 7, dans laquelle ledit troisième élément est divergent.

9. Appareil pour missile ayant une lentille achromatique (10) à bande ultralarge selon la revendication 1 ou la revendication 2.
